# EUROPÄISCHE PATENTANMELDUNG

(11) **EP 1 031 536 A1**
(43) Veröffentlichungstag der Anmeldung: **30.08.2000**
(21) Anmeldenummer: 99125182.8
(22) Anmeldetag: 17.12.1999
(51) Int. Cl.: C01B 21/06, C09C 1/00, C03C 8/14, C09D 7/12, C08K 3/28, A61K 7/00

(54) **Tantal(V)-nitrid-Pigmente, Verfahren zu deren Herstellung und deren Verwendung**

(30) Priorität: 23.02.1999 DE 19907616
(71) Anmelder: dmc2 Degussa Metals Catalysts Cerdec AG, 60287 Frankfurt am Main (DE)
(72) Erfinder: Letschert, Hans-Peter, Dr., 63450 Hanau (DE); Voigt, Wilfried, 63517 Rodenbach (DE)

(57) **Zusammenfassung**

Tantal(V)-oxid läßt sich mit Ammoniak bei 700 bis 1250 °C zu Tantal(V)-nitrid nitridieren. Erfindungsgemäß werden die Nitridierung und damit auch die Pigmentqualität verbessert, indem man dem zu nitridierenden Tantal(V)-oxid mindestens ein pulverförmiges Oxid aus der Reihe von SiO₂, GeO₂, SnO₂, TiO₂, ZrO₂ und HfO₂ oder eine pulverförmige Vorstufe eines solchen Oxids in einer Menge von mindestens 0,1 Gew.-%, berechnet als Oxid, zumischt, und dann das Pulvergemisch nitridiert.

## Beschreibung

Die Erfindung betrifft Tantal(V)-nitrid-Pigmente mit verbesserten Farbwerten des roten Pigments. Ein weiterer Gegenstand richtet sich auf die Herstellung der Tantal(V)-nitrid-Pigmente auf der Basis einer Nitridierung von Tantal(V)-oxid mit Ammoniak. Schließlich richtet sich die Erfindung auch auf die Verwendung der farblich verbessertes Tantal(V)-nitrid-Pigmente.

Beim Gebrauch als auch bei der Entsorgung von mit oxidischen, sulfidischen oder selenidischen Schwermetallverbindungen eingefärbten oder dekorierten Artikeln können toxikologisch bedenkliche Bestandteile, wie z. B. Cadmium und Selen aus Cadmiumsulfoselenid-Rotpigmenten freigesetzt werden. Es besteht somit ein besonderes Interesse, Pigmente mit toxikologisch weniger bedenklichen Bestandteilen zu verwenden. Tantal(V)-nitrid (Ta₃N₅) ist eine unbedenkliche Alternative, jedoch entsprechen die Farbwerte, insbesondere die Brillanz, der nach bisher bekannten Verfahren erhältlichen Pigmente nicht immer den Erwartungen. Die bisher bekannten Herstellungsverfahren führen entweder zu unbefriedigenden Farbwerten oder machen den Einsatz besonderer Tantalausgangsverbindungen erforderlich.

Das Nitrid des fünfwertigen Tantals läßt sich gemäß H.Moureau und C.H.Hamblet (J. Amer. Chem. Soc. 59, 33-40 (1937)) durch Ammonolyse von TaCl₅ herstellen. Das hierbei gewonnene Nitrid ist nicht rein, denn es enthält oxidische Bestandteile. Zudem sind die Reaktionszeiten sehr lang. H.Funk und H.Böhland (Z. anorg. allg. Chem. 334, 155-62 (1964)) konnten die Reaktionszeiten durch Nitridierung von (NH₄)TaF₆ verkürzen. Wegen der Flüchtigkeit von TaF₅ und NH₄F sind die Ausbeuten an Ta₃N₅ nur gering und/oder die Produkte sind fluorhaltig. Offenbart wurde in dem genannten Dokument auch die Nitridierung von Tantal(V)-oxid (Ta₂O₅) bei 800 °C mit Ammoniak; es bildet sich bei 800 °C ein oxidhaltiges Nitrid (Ta₃N₅ (O)), dessen Farbe nicht näher gekennzeichnet wurde.

Die Nitridierung von reinem Tantalpentoxid mit gereinigtem Ammoniak wurde unter Bezugnahme auf die Untersuchung von Funk und Böhland von G.Brauer und J.R.Weidlein (Angew. Chem. 77, 218-9 (1965)) erneut untersucht: In Anwesenheit von Titan-Spänen als Getter für Sauerstoff erfordert die Umsetzung eine Reaktionszeit von 36 bis 120 Stunden bei 860 bis 920 °C. Bei der Nacharbeitung dieser Untersuchungen (siehe EP-A 0 592 867) konnten die Reaktionszeiten nicht bestätigt werden: Erst nach einer Reaktionszeit von 150 Stunden war die Farbbildung abgeschlossen, das heißt, es fand keine weitere Farbverschiebung statt. Das so erhaltende Tantal(V)-nitrid war aber rotbraun und damit coloristisch uninteressant.

Gemäß dem in der EP-A 0 592 867 beschriebenen Verfahren gelingt es, Tantal(V)-nitrid mit höherer Farbintensität zu erhalten und gleichzeitig die Reaktionszeit zu verkürzen. Bei diesem Verfahren wird anstelle von Tantal(V)-oxid ein Tantal(V)-oxidhydrat der formelmäßigen Zusammensetzung Ta₂O₅ ^{.} Aq mit einem Hydratgehalt (Aq-Gehalt) im Bereich von 14 bis 17 Gew.-% eingesetzt. Zur Verkürzung der Reaktionsdauer der Nitridierung werden dem zu nitridierenden Tantaloxidhydrat Flußmittel zugesetzt. Das hierbei erhaltene Pigment zeigte gegenüber den vorbekannten Produkten eine Rotverschiebung sowie eine wesentlich höhere Farbintensität als Produkte, wie sie unter Einsatz von Tantal(V)oxid erhältlich waren.

Ein Nachteil des zuletzt gewürdigten Verfahren ist, daß nicht kommerziell erhältliches billiges Tantal(V)oxid eingesetzt werden konnte, sondern nur ein speziell hergestelltes Tantal(V)oxidhydrat. Ein Nachteil der älteren Verfahren unter Einsatz von Tantal(V)oxid führte, wie zuvor dargestellt, zu Produkten, deren Farbwerte eine Verwendung als Rotpigment verhinderten. Aufgabe der vorliegenden Erfindung ist demgemäß ein Verfahren zur Herstellung von Tantal(V)-nitrid mit nach Möglichkeit gegenüber vorbekannten Produkten verbesserten Farbwerten aufzuzeigen, das auf der Nitridierung von Tantal(V)oxid mit Ammoniak basiert.

Gefunden wurde ein Verfahren zur Herstellung von Tantal(V)-nitrid-Pigment durch Nitridierung von pulverförmigem Tantal(V)-oxid mit Ammoniak bei 700 bis 1250 °C, das dadurch gekennzeichnet ist, daß man dem zu nitridierenden Tantal(V)-oxid mindestens ein pulverförmiges Oxid aus der Reihe von SiO₂, GeO₂, SnO₂, TiO₂, ZrO₂ und HfO₂ oder eine pulverförmige Vorstufe eines solchen Oxids in einer Menge von mindestens 0,1 Gew.-%, berechnet als Oxid, zumischt und dann das Pulvergemisch nitridiert. Die abhängigen Verfahrensansprüche richten sich auf bevorzugte Ausführungsformen.

Völlig überraschend wurde gefunden, daß sich die Nitridierung von Tantal(V)-oxid wesentlich verbessern läßt, wenn man dem pulverförmigen Tantal(V)oxid vor der Nitridierung ein inertes Oxid aus der Reihe SiO₂, GeO₂, SnO₂, TiO₂, ZrO₂ und HfO₂ oder eine pulverförmige Vorstufe eines solchen Oxids zumischt. Bei der Nitridierung des homogenen Pulvergemischs werden rote Pigmente erhalten.

Unter dem Begriff "inert" wird verstanden, daß die genannten Oxide oder Vorstufen derselben unter den Nitridierungsbedingungen im wesentlichen selbst keine Nitride bilden.

Die Einsatzmenge dieser Oxide beziehungsweise Vorstufen derselben kann in weiten Grenzen variieren: Eine Einsatzmenge unter 0,1 Gew.-%, bezogen auf Tantal(V)oxid, ist möglich, jedoch ist in solchen Fällen der Effekt naturgemäß noch gering. Üblicherweise wird eine Einsatzmenge von mindestens 1 Gew.-% Oxid oder Vorstufe eines solchen, berechnet als Oxid, bevorzugt. Es ist möglich, dem Tantal(V)oxid auch mehr als 20 Gew.-% eines oder mehrerer der genannten Oxide oder Vorstufen derselben zuzusetzen, jedoch ist hierbei zu beachten, daß die erhaltenen Pigmente dann zunehmend heller werden. Vorzugsweise beträgt die Einsatzmenge 2 bis 15 Gew.-%, besonders bevorzugt 3 bis etwa 10 Gew.-%.

Der erfindungsgemäße Effekt, die Nitridierung zu begünstigen und zu Produkten mit besseren Farbwerten zu führen, kann unter Einsatz eines einzigen der genannten Oxide oder Vorstufen derselben bewirkt werden. Es ist jedoch auch möglich, eine Kombination von zwei oder mehreren solcher Verbindungen zu verwenden. Unter dem Begriff "Vorstufen eines solchen Oxids" werden solche Verbindungen verstanden, welche unterhalb der Nitridierungstemperatur, also beim Aufheizen des Pulvergemischs, in das Oxid übergehen. Demgemäß sind geeignete Vorstufen der Oxide, insbesondere Oxidhydrate, Nitrate, Carbonate und Salze von niederen Carbonsäuren.

Gemäß besonders bevorzugten Ausführungsformen des erfindungsgemäßen Verfahrens werden dem Tantal(V)oxid Kieselsäure, Zirkoniumdioxid oder eine Vorstufe dieser Oxide, insbesondere basisches Zirkoniumcarbonat, oder Gemische der genannten Verbindungen zugesetzt.

Es wurde festgestellt, daß es besonders vorteilhaft ist, eines oder mehrere der genannten Oxide oder Vorstufen derselben sowie auch das zu nitrierende Tantal(V)oxid in möglichst feinpulvriger Form einzusetzen. Als Tantal(V)oxid eignen sich handelsübliche Produkte in Pigmentqualität. Dem zu nitrierenden Tantal(V)oxid werden besonders bevorzugt solche Oxide oder Vorstufen zugesetzt, deren spezifische Oberfläche (gemessen nach BET gemäß DIN 66131 mit N₂) mindestens 5 m²/g, vorzugsweise über 50 m²/g und besonders bevorzugt um 200 m²/g beträgt. Einsetzbar sind beispielsweise durch Mahlprozesse sowie durch Fällungsverfahren oder durch Flammenhydrolyse hergestellte Oxide. Auch ZrO₂ wie es durch thermische Spaltung von Zirkonsilikat mit nachfolgender Laugung der Kieselsäurematrix erhältlich ist, ist geeignet.

Zur Herstellung des Pulvergemischs können dem Fachmann bekannte Einrichtungen verwendet werden: Zur Homogenisierung des Pulvergemischs eignen sich beliebige Misch- und/oder Mahlvorrichtungen, wodurch das zu nitridierende Tantaloxid mit dem oder den zugemischten Oxiden oder Vorstufen derselben in eine gleichmäßige Verteilung gebracht werden. Eine gute Homogenisierung wird auch in Nitridierungsreaktoren, in welchen das Pulvergemisch ständig bewegt wird, ermöglicht.

Die Nitridierung erfolgt zweckmäßigerweise unter Durchleiten von Ammoniak oder einem Ammoniak enthaltenden inerten Gas durch einen das Pulvergemisch enthaltenden Reaktor bei 700 bis 1250 °C, vorzugsweise 850 bis 950 °C. Gemäß einer besonders bevorzugten Ausführungsform wird die Nitridierung in einem Drehrohrreaktor durchgeführt. Es wurde festgestellt, daß es zweckmäßig ist, mit zunehmender Reaktionstemperatur die Strömungsgeschwindigkeit des Ammoniaks zu erhöhen. Auf diese Weise können die Farbqualität mindernde Nebenreaktionen verhindert werden. Eine Strömungsgeschwindigkeit von über 0,5 m/s, insbesondere 1 bis 5 m/s wird bevorzugt.

Zur Erniedrigung der Nitridierungstemperatur und/oder Reduzierung der erforderlichen Reaktionsdauer kann das zu nitridierende Pulvergemisch zusätzlich Flußmittel enthalten. Geeignete Flußmittel sind Ammoniumsalze von Kohlensäure, niederen Carbonsäuren oder einer Borsäure; Borsäuren und Borsäureanhydride; Alkalimetall- und Erdalkalimetallhalogenide. Dem zu nitridierenden Pulvergemisch können ein oder mehrere Flußmittel in feinpulvriger Form zugesetzt werden. Sofern dem Pulvergemisch Flußmittel zugesetzt werden, beträgt die Einsatzmenge zweckmäßigerweise 1 bis 50 Gew.-% und vorzugsweise 5 bis 20 Gew.-%, bezogen auf das Pulvergemisch. Sofern dies erwünscht ist, können nach der Nitridierung aus dem erhaltenen Pigment wasserlösliche Flußmittel herausgelöst werden.

Die erfindungsgemäß hergestellten Pigmente zeichnen sich durch außergewöhnlich gute Farbwerte L*a*b* im CIE-Lab-System (DIN 5033, Teil 3) aus. Tantal(V)nitrid-Pigmente mit solchen Farbwerten waren nach dem bisher bekannten Verfahren nicht erhältlich. Demgemäß sind die erfindungsgemäßen Tantal(V)nitrid-Pigmente gekennzeichnet durch einen Gehalt an mindestens einem Oxid aus der Reihe SiO₂, GeO₂, ZnO₂, TiO₂, ZrO₂ und HfO₂ in einer Menge von mindestens 0,1 Gew.-%. Erfindungsgemäße Tantal(V)nitrid-Pigmente sind außer durch das erfindungsgemäße Verfahren auch durch Nitridierung anderer Tantal(V)-verbindungen, insbesondere Tantal(V)-oxidhydraten oder Tantal(V)-oxidnitriden erhältlich.

Unter Zugrundelegung der nachfolgenden Testkriterien weisen bevorzugte erfindungsgemäße Pigmente folgende L*a*b*-Farbwerte auf: L* kleiner 40; a* größer 35, insbesondere 40 bis 45; b* 40 bis 50. Die Farbmessung erfolgte an mit dem Pigment eingefärbten PVC-Plastisolen, wobei 0,7 g Pigment und 2 g Plastisol vermischt und in einer Farbausreibemaschine dispergiert wurden; Aufstriche der Pasten in einer Dicke von 300 µm wurden 10 Minuten bei 140 °C geliert. Wie die Farbwerte zeigen, zeichnen sich die Pigmente durch einen hohen Rotwert, eine hohe Brillanz und hohe Farbintensität aus. Ein weiterer Vorteil, der in den erfindungsgemäßen Pigmenten verfahrensbedingt enthaltenen Oxide ist die Verbesserung der Rieselfähigkeit der Pigmente.

Die erfindungsgemäßen Pigmente lassen sich zur Herstellung von Glasfarben sowie zum Einfärben von unterhalb 800 °C einbrennfähigen Glasuren sowie zum Einfärben von Kunststoffen, Lacken und kosmetischen Artikeln verwenden. Glasfarben sind erhältlich durch Mischen von Pigmenten mit Flußmitteln, insbesondere Glasfritten. Zur Anwendung, das heißt, Dekoration eines Substrats im Direktdruck oder zur Herstellung von Abziehbildern wird das Gemisch aus Pigment und Fluß zunächst in einem flüssigen bis pastösen Druckmedium dispergiert.

Die Vorteile der Erfindung bestehen darin, daß kommerziell erhältliches Tantal(V)oxid in der Nitrierung eingesetzt werden kann und dennoch hoch farbbrillante Pigmente erhalten werden. Die im Pigment enthaltenen Oxide führen, sofern diese in einer Menge um/unter 10 Gew.-% in dem zu nitrierenden Pulvergemisch zugegen sind, nur zu einer geringen Farbtonaufhellung, wohl aber zu einer Steigerung der Brillanz und der Rieselfähigkeit. Die dem zu nitrierenden Tantal(V)oxid zuzumischenden Oxide oder Vorstufen derselben führen zudem zu einer Beschleunigung der Umsetzung.

Die Erfindung wird anhand der nachfolgenden Beispiele und Vergleichsbeispiele verdeutlicht.

### Herstellung der Pigmente:

### Beispiel 1 (B1)

300 g handelsübliches Tantal(V)-oxid (Reinheit >99,9 %, d₅₀ = 0,5 µm) wurden mit 6 % Siliciumdioxid (F 500 der Firma Quarzwerke Frechen, d₅₀ = 3,4 µm) versetzt und homogenisiert. Anschließend wurde die Mischung mit Ammoniak (1300 1/h) 12 Stunden lang in einem Drehrohr (dᵢ = 14 cm) aus Quarzglas auf 910 °C geheizt (Umdrehungsgeschwindigkeit Drehrohr: 1 U/min.). Man erhielt ein rotes Pulver als Produkt.

### Beispiel 2 (B2)

300 g handelsübliches Tantal(V)-oxid (Reinheit >99,9 %) wurden mit 9 % Siliciumdioxid F 500 versetzt und homogenisiert. Anschließend wurde die Mischung mit Ammoniak (1300 1/h) 12 Stunden lang in einem Drehrohr aus Quarzglas auf 910 °C geheizt (Umdrehungsgeschwindigkeit Drehrohr: 1 U/min.). Man erhielt ein rotes Pulver als Produkt.

### Beispiel 3 (B3)

300 g handelsübliches Tantal(V)-oxid (Reinheit >99,9 %) wurden mit 4 Gew.-% gefällter Kieselsäure (Sipernat 22S der Firma Degussa) versetzt und homogenisiert. Anschließend wurde die Mischung mit Ammoniak (1300 1/h) 12 Stunden lang in einem Drehrohr aus Quarzglas auf 910 °C geheizt (Umdrehungsgeschwindigkeit Drehrohr: 1 U/min.). Man erhielt ein rotes Pulver als Produkt.

### Beispiel 4 (B4)

300 g handelsübliches Tantal(V)-oxid (Reinheit >99,9 %) wurden mit 3 Gew.-% gefällter Kieselsäure (Sipernat 22S) und 4 Gew.-% Siliciumdioxid F 500 versetzt und homogenisiert. Anschließend wurde die Mischung mit Ammoniak (1300 1/h) 12 Stunden lang in einem Drehrohr aus Quarzglas auf 910 °C geheizt (Umdrehungsgeschwindigkeit Drehrohr: 1 U/min.). Man erhielt ein rotes Pulver als Produkt.

### Beispiel 5 (B5)

300 g handelsübliches Tantal(V)-oxid (Reinheit >99,9 %) wurden mit 10 Gew.-% Zirkoniumdioxid mit einem mittleren Korndurchmesser von 2,4 µm versetzt und homogenisiert. Anschließend wurde die Mischung mit Ammoniak (1300 1/h) 12 Stunden lang in einem Drehrohr aus Quarzglas auf 910 °C geheizt (Umdrehungsgeschwindigkeit Drehrohr: 1 U/min.). Man erhielt ein rotes Pulver als Produkt.

### Beispiel 6 (B6)

300 g handelsübliches Tantal(V)-oxid (Reinheit >99,9 %) wurden mit 5 Gew.-% basischem Zirkoncarbonat (Firma Kynoch Kaapstreek) und 6 Gew.-% gefällter Kieselsäure (Sipernat 22S) versetzt und homogenisiert. Anschließend wurde die Mischung mit Ammoniak (1300 1/h) 12 Stunden lang in einem Drehrohr aus Quarzglas auf 910 °C geheizt (Umdrehungsgeschwindigkeit Drehrohr: 1 U/min.). Man erhielt ein rotes Pulver als Produkt.

### Vergleichsbeispiel 1 (VB1)

300 g handelsübliches Tantal(V)-oxid (Reinheit >99,9 %) wurde in ein Drehrohr aus Quarzglas gefüllt. Anschließend wurde das Oxid mit Ammoniak (1300 1/h) 12 Stunden lang in einem Drehrohr aus Quarzglas auf 910 °C geheizt (Umdrehungsgeschwindigkeit Drehrohr: 1 U/min.). Man erhielt ein braunrotes Pulver als Produkt.

### Vergleichsbeispiel 2 (VB 2)

a) Herstellung des Tantaloxidhydrats:
   10 g Tantal(V)-chlorid werden in 400 ml konz. Salzsäure in der Siedehitze gelöst. Anschließend wird mit 80 ml Wasser verdünnt und Tantaloxidhydrat mit konz. Ammoniaklösung bei pH 7 gefüllt. Der Niederschlag wird chloridfrei gewaschen, mit Ethanol aufgeschlämmt und bei 120 °C getrocknet. Das röntgenamorphe Produkt weist einen Restwassergehalt von 14,9 Gew.-% auf (nach Glühen auf 1000 °C).
b) Nitridierung:
   Anschließend wird 1 g dieses Produkts in ein Korundschiffchen gegeben und im Ammoniakstrom (9 l/h) 80 Stunden lang auf 820 °C geheizt. Man erhält ein rotes Produkt.
c) Farbwerte:
   Die Farbwerte des wie üblich in gleicher Menge eingefärbten (0,7 g Pigment und 2 g PVC-Plastisol) Kunststoffes lauten: L* 35,21; a* 38,03; b* 41,44.

### Coloristische Prüfung der erhaltenen Pulver:

Die nach den oben angegebenen Vorschriften hergestellten Pulver wurden in PVC-Plastisol eingearbeitet und coloristisch geprüft. Hierzu wurden 0,7 g der jeweiligen Probe und 2 g Plastisol vermischt und in einer Farbausreibemaschine dispergiert. Mit einem Schlitten wurden aus den Pasten Aufstriche in einer Dicke von 300 µm hergestellt. Die Gelierung erfolgte durch Erhitzen bei 140 °C innerhalb von 10 Minuten. Mit einem Spektralphotometer wurden die Farbwerte gemessen und umgerechnet auf L*a*b* im CIE-Lab-System (DIN 5033, Teil 3). Die Farbwerte folgen aus der nachfolgenden Tabelle.

**Tabelle:**

| Versuch | L* | a* | b* |
|---|---|---|---|
| B 1 | 37,61 | 36,82 | 44,67 |
| B 2 | 37,48 | 36,80 | 45,21 |
| B 3 | 37,88 | 42,41 | 48,30 |
| B 4 | 39,56 | 43,17 | 50,24 |
| B 5 | 31,12 | 31,92 | 30,90 |
| B 6 | 35,04 | 41,06 | 43,50 |
| VB 1 | 37,99 | 26,35 | 27,13 |
| VB 2 | 35,21 | 38,03 | 41,44 |

Beim Vergleich der Beispiele mit dem Vergleichsbeispiel 1 zeigt sich, daß durch die Zugabe der Oxide die Farbbildung signifikant verbessert wird.

Beim Vergleich der erfindungsgemäßen Beispiele 3, 4 und 6 mit dem Vergleichsbeispiel 2 zeigt sich, daß bei optimierter Auswahl des/der Oxide oder Vorstufen höhere a-Werte (Rotwerte) erhältlich sind als in deren Abwesenheit.

## Patentansprüche

1. Verfahren zur Herstellung von Tantal(V)-nitrid-Pigment durch Nitridierung von pulverförmigem Tantal(V)-oxid mit Ammoniak bei 700 bis 1250 °C,
dadurch gekennzeichnet,
daß man dem zu nitridierenden Tantal(V)-oxid mindestens ein pulverförmiges Oxid aus der Reihe von SiO₂, GeO₂, SnO₂, TiO₂, ZrO₂ und HfO₂ oder eine pulverförmige Vorstufe eines solchen Oxids in einer Menge von mindestens 0,1 Gew.-%, berechnet als Oxid, zumischt, und dann das Pulvergemisch nitridiert.

2. Verfahren nach Anspruch 1,
dadurch gekennzeichnet,
daß man dem zu nitridierenden Tantal(V)-oxid ein oder mehrere pulverförmige Oxide aus der Reihe SiO₂ und ZrO₂ oder Vorstufen von SiO₂ und ZrO₂ in einer Menge von 1 bis 20 Gew.-%, insbesondere 2 bis 15 Gew.-%, zumischt.

3. Verfahren nach Anspruch 1 oder 2,
dadurch gekennzeichnet,
daß man dem Tantal(V)-oxid Oxide und/oder Vorstufen derselben mit einer spezifischen Oberfläche von mindestens 10 m²/g zumischt.

4. Verfahren nach einem der Ansprüche 1 bis 3,
dadurch gekennzeichnet,
daß man die Nitridierung bei 850 bis 950 °C durchführt.

5. Verfahren nach einem der Ansprüche 1 bis 4,
dadurch gekennzeichnet,
daß man dem zu nitridierenden Tantal(V)-oxid 2 bis 10 Gew.-% einer pyrogenen oder gefällten Kieselsäure mit einer spezifischen Oberfläche (BET, N₂) im Bereich von 150 bis 700 m²/g zumischt.

6. Verfahren nach einem der Ansprüche 1 bis 5,
dadurch gekennzeichnet,
daß man als Quelle für ZrO₂ basisches Zirkoncarbonat einsetzt.

7. Verfahren nach einem der Ansprüche 1 bis 6,
dadurch gekennzeichnet,
daß das zu nitridierende Pulvergemisch zusätzlich ein oder mehrere Flußmittel aus der Reihe von Ammoniumsalzen der Kohlensäure, einer niederen Carbonsäure oder einer Borsäure, Borsäuren, Borsäureanhydriden, Alkalimetallhalogeniden und Erdalkalimetallhalogeniden enthält.

8. Verfahren nach einem der Ansprüche 1 bis 6,
dadurch gekennzeichnet,
daß man die Nitridierung in einem Drehrohr durchführt.

9. Tantal(V)-nitrid-Pigment, gekennzeichnet durch einen Gehalt an mindestens einem Oxid aus der Reihe SiO₂, GeO₂, SnO₂, TiO₂, ZrO₂ und HfO₂, in einer Menge von mindestens 0,1 Gew.-%.

10. Verwendung von Tantal(V)-nitrid-Pigmenten gemäß Anspruch 9 oder erhalten nach einem der Ansprüche 1 bis 8 zur Herstellung von Glasfarben und unterhalb 700 °C einbrennfähigen Glasuren sowie zum Einfärben von Kunststoffen, Lacken und kosmetischen Artikeln.
